# EUROPEAN PATENT SPECIFICATION

(11) **EP 0 780 285 B1**
(45) Date of publication and mention of the grant of the patent: **19.08.1998**
(21) Application number: 96119768.8
(22) Date of filing: 10.12.1996
(51) Int. Cl.: B62D 29/00

(54) **Motor vehicle frame**
Rahmen für ein Kraftfahrzeug
Chassis pour véhicule à moteur

(30) Priority: 21.12.1995 IT TO951033
(43) Date of publication of application: 25.06.1997
(73) Proprietor: FIAT AUTO S.p.A., 10135 Torino (IT)
(72) Inventor: Albizzati, Luigi Massimo, 20010 Marcallo Con Casone (MI) (IT)
(74) Representative: Di Francesco, Gianni

(56) References cited:
- EP-A- 0 570 150
- WO-A-90/02680
- FR-A- 2 712 249
- US-A- 2 177 896

## Description

The present invention relates generally to motor vehicle frames, and more particularly to a frame of the kind formed by a lattice-work of tubes to which panels composing the vehicle body are connected in known manner. A motor vehicle frame according to the preamble of claim 1 is known from EP-A-570150.

The ever increasing need to reduce fuel consumption in order to save costs and limit pollution of the environment has lead manufacturers to make all vehicle components as light as possible.

Also the vehicle body, conventionally constructed from sheet steel, has been changed into a composite frame structure composed of tubular and non-tubular structural members having panels riveted, welded or glued thereto. The peculiarity of this composite structure lies in that the frame is made of aluminium to reduce the weight.

One of the problems encountered with the above cited kind of frame is that some of its parts, particularly the structural Junctions between the tubular members are produced by casting due to their shape, whilst the tubular members are extruded. Difficulties arise not for the different processing, but because the two parts are difficult to secure by welding, as it is necessary to employ a material which is capable of amalgamating with both the alloys used for the two different processes.

In the event of an accident occurring, the welding points involved will obviously have to be checked to prevent adverse giving in of part of the frame.

A possible solution to the above identified problem would be to eliminate the need to carry out two different manufacturing processes and provide a frame constructed only with aluminium alloy extruded parts.

To this end it is necessary to eliminate the structural junctions or simplify their shape, so that manufacturers will not be compelled to construct parts having complex shapes that can be obtained only through a casting process.

It is an object of this invention to provide extruded elements having a shape that allows them to be coupled in suitable manner to provide connection to several closed structures forming the various parts of the motor vehicle frame, thereby dispensing of having to construct cast or fixed joint structural junctions.

This object is achieved in accordance with the present invention by a motor vehicle frame according to claim 1.

Further advantages and features of the present invention will become readily apparent to those skilled in the art from a study of the following description of an exemplary preferred embodiment when read in conjunction with the attached drawings, in which:
- FIG. 1: is a perspective view of half of a motor vehicle frame constructed in accordance with the present invention, the frame being sectioned along a longitudinal vertical plane;

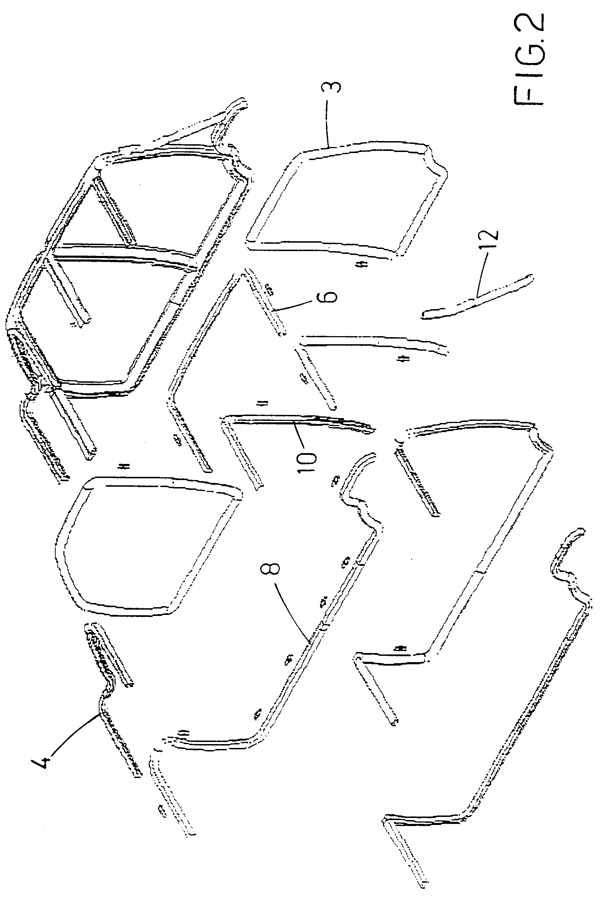

- FIG. 2: is an exploded view of the parts forming another half-frame, also shown as assembled; and
- FIG. 3: is a cross sectional view of four sections forming the parts making up the frames of FIGS. 1 and 2 and joined by a connecting member.

Referring the drawings, numeral 1 designates a motor vehicle frame formed by aluminium alloy extruded tubular elements 2. The frame is composed of a plurality of loop-shaped structural members forming the several parts, for example the door loop member 3, the windshield loop member 4, the top loop member 6, the base loop member forming the bottom of the body side 8 or the loop members 9 forming the vehicle floor. The frame is further composed of elements not having a loop shape, but which are so contoured as to be butt welded to the other loop shaped members and serve to complete the structure of the vehicle. Examples of such contoured members are the body centre pillar 10 and the luggage compartment support 12.

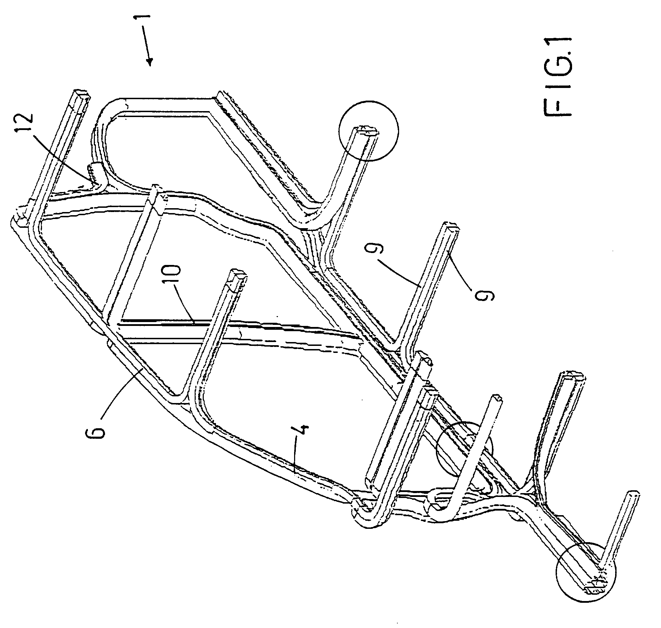

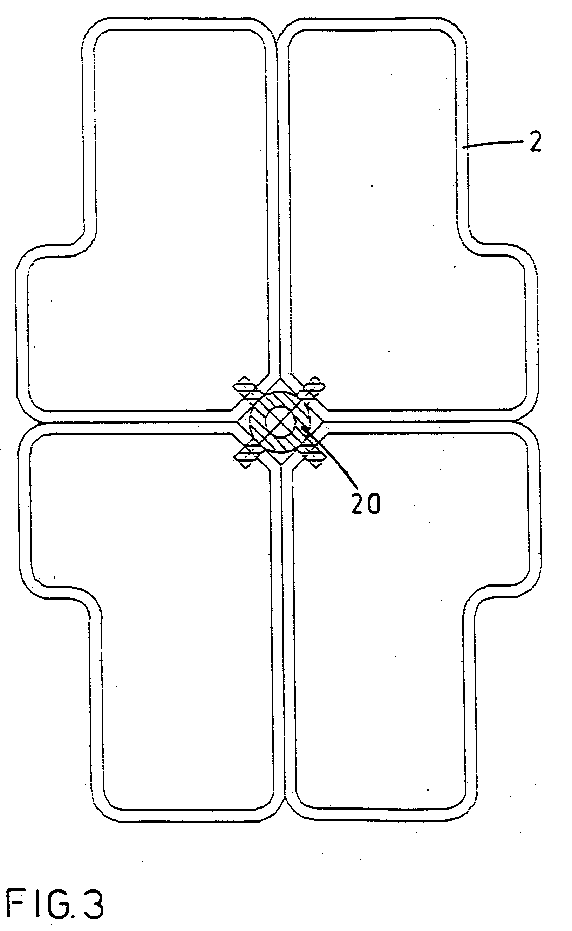

As shown for example in FIG. 1, along extensive portions of their length, the loop members are joined together forming groups of four, or four plus two, or four plus four, thereby forming symmetrical structures as pointed out by a circle in FIG. 1. One of said structures is shown in detail in FIG. 3. In this drawing, eight sides, two for each tubular element, are fitted side to side and joined by a metal or plastic structure 20, or joined by using welding or other known means. As shown, coupling of two loop elements is always attained by fitting at least one wall of each of the extruded elements near to a wall of another element so as to provide easy attachment thereof.

The above discussed problem of the structural junctions is so solved in that conventional junctions are replaced by appropriate contours designed for each loop element forming the frame.

Only a few butt welding points are maintained, as for example the one between the bottom of the body side 8 and the body centre pillar 10. However, these points do not form crucial structural junctions for the frame, whereby butt welding is sufficient to withstand the forces acting on them.

The shape of the cross section, the frame elements and their number may depart from the above described embodiment without departing from the inventive concept defined by the claims.

## Claims

1. A motor vehicle frame, particularly a motor car frame, of the type composed of tubular elements assembled together, said elements being extruded elements of an aluminium alloy having a shape in cross-section adapted for coupling together along at least part of their extension to form a single composite tubular element, characterised in that said tubular elements all have the same shape in cross-section and form a symmetrical composite tubular element by coupling in number of four.

2. A motor vehicle frame as claimed in claim 1 characterised in that the shape of the cross section of the tubular elements (2) is depending directly on the frame to be obtained.

## Patentansprüche

1. Kraftfahrzeugrahmen, insbesondere Autorahmen, der Art, die aus zusammengefügten rohrförmigen Elementen besteht, wobei die Elemente aus einer Aluminiumlegierung extrudierte Elemente sind, deren Querschnittsform so gestaltet ist, daß sie zumindest über einen Teil ihrer Ausdehnung miteinander verbunden werden können, um ein einzelnes zusammengesetztes rohrförmiges Element zu bilden, dadurch gekennzeichnet, daß alle rohrförmigen Elemente die gleiche Querschnittsform haben und ein symmetrisches zusammengesetztes rohrförmiges Element durch Verbinden von 4 Stück bilden.

2. Kraftfahrzeugrahmen nach Anspruch 1, dadurch gekennzeichnet, daß die Querschnittsform der rohrförmigen Elemente (2) unmittelbar von dem zu bildenden Rahmen abhängt.

## Revendications

1. Châssis de véhicule à moteur, en particulier d'un châssis d'un véhicule automobile, du type composé d'éléments tubulaires assemblés ensemble, lesdits éléments étant des éléments extrudés en alliage d'aluminium dont la forme de la section droite leur permet d'être couplés ensemble le long d'au moins une partie de leur extension de manière à former un élément tubulaire composite unique, caractérisé en ce que les éléments tubulaires ont tous une section droite présentant la même forme et en ce qu'ils forment, par couplage de quatre d'entre eux, un élement tubulaire composite symétrique.

2. Châssis de véhicule à moteur selon la revendication 1, caractérisé en ce que la forme de la section droite des éléments tubulaires (2) dépend directement du châssis devant être obtenu.
